# EUROPÄISCHE PATENTANMELDUNG

(11) **EP 3 569 876 A1**
(43) Veröffentlichungstag der Anmeldung: **20.11.2019**
(21) Anmeldenummer: 18171981.6
(22) Anmeldetag: 14.05.2018
(51) Int. Cl.: F16B 13/08, F16B 13/06

(54) **ANKERBOLZEN ZUR VERWENDUNG IN BEFESTIGUNGSMÖRTEL, BEFESTIGUNGSSYSTEM UND VERFAHREN ZUR HERSTELLUNG EINES ANKERBOLZENS**

(71) Anmelder: HILTI Aktiengesellschaft, 9494 Schaan (LI)
(72) Erfinder: Dierker, Sascha, 86504 Merching (DE)
(74) Vertreter: Hilti Aktiengesellschaft Corporate Intellectual Property

(57) **Zusammenfassung**

Es wird ein Ankerbolzen (10) zur Verwendung in Befestigungsmörtel (42) angegeben, aufweisend einen Schaftabschnitt (12), einen Ankerabschnitt (14) und ein Spreizelement (18), wobei das Spreizelement (18) hülsenförmig ausgebildet ist und den Ankerabschnitt (14) zumindest bereichsweise umfangsmäßig derart umgibt, dass das Spreizelement (18) zumindest relativ zum Ankerabschnitt (14) bewegbar ist, und wobei das Spreizelement (18) eine aufweitbare Mantelfläche bereitstellt. Des Weiteren werden ein Befestigungssystem (40) aufweisend einen Ankerbolzen (10) und Befestigungsmörtel (42) sowie ein Verfahren zur Herstellung eines Ankerbolzens (10) angegeben.

## Beschreibung

Die vorliegende Erfindung betrifft einen Ankerbolzen zur Verwendung in Befestigungsmörtel, ein Befestigungssystem mit einem Ankerbolzen und Befestigungsmörtel sowie ein Verfahren zur Herstellung eines Ankerbolzens.

Aus dem Stand der Technik sind Ankerbolzen bekannt, die einen Ankerabschnitt aufweisen, und die gewöhnlich zusammen mit radikalisch härtenden Mörteln verwendet werden, wobei selbst in gerissenen und/oder ungereinigten Bohrlöchern gute Lastwerte erhalten werden können. Des Weiteren sind Ankerbolzen bekannt, die ein den Ankerabschnitt umgebendes Befestigungselement aufweisen, sodass zunächst zumindest bereichsweise keine direkte mechanische Kopplung zwischen dem Ankerabschnitt und dem Befestigungsmörtel besteht, wobei das Befestigungselement bei mechanischer Belastung reißen kann, sodass sich der Ankerbolzen in den zerrissenen Teilen des Befestigungselements mit den daran anhaftenden Segmenten einer Mörtelhülse verankern kann, die das Befestigungselement zuvor umgehen hat. Allerdings ist das Aufbrechen der Mörtelhülse stark abhängig von einer Adhäsion zwischen dem Befestigungsmörtel und dem Ankerbolzen bzw. dem Befestigungselement sowie von einem aufgebrachten Anzugsmoment und einer Elastizität des Befestigungsmörtels.

Es ist somit eine Aufgabe der vorliegenden Erfindung, einen Ankerbolzen bereitzustellen, der unter Zuhilfenahme eines Befestigungsmörtels zuverlässig dynamische oder statische Lasten in einen Untergrund einleiten kann.

Diese Aufgabe wird erfindungsgemäß gelöst durch einen Ankerbolzen zur Verwendung in Befestigungsmörtel, aufweisend einen Schaftabschnitt, einen Ankerabschnitt und ein Spreizelement, wobei das Spreizelement hülsenförmig ausgebildet ist und den Ankerabschnitt zumindest bereichsweise umfangsmäßig derart umgibt, dass das Spreizelement zumindest relativ zum Ankerabschnitt bewegbar ist, und wobei das Spreizelement eine aufweitbare Mantelfläche bereitstellt.

Unter einer Aufweitung der Mantelfläche des Spreizelements ist zu verstehen, dass sich der Durchmesser beziehungsweise der Umfang des Spreizelements vergrößert. Die Aufweitung ist erzwungen durch das Aufbringen einer Vorspannung oder einer Gebrauchslast auf den Ankerbolzen, insbesondere über den Schaftabschnitt. Der Befestigungsmörtel wird dadurch gegen den Untergrund gepresst und bricht, was zu einer zuverlässigen Verankerung des Ankerbolzens im Untergrund führt, insbesondere in den Segmenten der dann gebrochenen Mörtelhülse. Das Spreizelement spreizt bereits bei geringen Lasten auf, sodass eine sichere Verankerung gewährleistet ist. Der Betrag eines Form- und/oder Stoffschlusses des Befestigungsmörtels ist für eine Höhe der Gebrauchslast nicht mehr relevant, da die Mörtelhülse in jedem Fall gegen den Untergrund gepresst wird, wie bereits erläutert wurde.

Zudem kann auf eine Beschichtung zwischen dem Spreizelement und/oder dem Ankerabschnitt und/oder dem Befestigungsmörtel verzichtet werden, da eine Relativbewegung vorgesehen ist. Dementsprechend lässt sich der Ankerbolzen günstiger herstellen.

Es ist jedoch auch denkbar, eine Beschichtung, zum Beispiel aus Wachs, auf dem Ankerabschnitt vorzusehen.

Das Spreizelement ist beispielsweise ein Spritzgussbauteil. Alternativ kann das Spreizelement eine Schrumpffolie sein, die auf den Ankerabschnitt aufgebracht wird und die Adhäsion zum Befestigungsmörtel nahezu komplett unterbindet.

Gemäß einer Ausführungsform ist das Spreizelement axial und/oder radial gegenüber dem Ankerabschnitt verschiebbar. Eine Aufweitung des Spreizelements kann somit durch eine Zugkraft und/oder Querkraft auf den Ankerbolzen erreicht werden. Dabei kann das Spreizelement die Form einer zweiseitig offenen Hülse oder einer einseitig offenen Kappe haben.

Vorzugsweise hat das Spreizelements in Richtung einer Längsachse des Ankerbolzens eine Länge zwischen 3% und 100% einer Einbindetiefe des Ankerbolzens in einem Untergrund, besonders bevorzugt mehr als 60%.

Bei der Einbindetiefe handelt es sich um die Distanz, die der Ankerbolzen in eine Öffnung eingesteckt ist, die beispielsweise mit einem Befestigungsmörtel aufgefüllt ist, insbesondere einem Verbundmörtel.

Der Ankerbolzen weist vorzugsweise einen Anschlag auf, an dem das Spreizelement anliegt. Somit kann das Spreizelement in einer definierten Position am Ankerabschnitt des Ankerbolzens positioniert werden. Durch den Anschlag wird außerdem erreicht, dass sich das Spreizelement ausgehend von einer Ausgangsposition nur in eine (axiale) Richtung bewegen kann, wobei diese Bewegung zu einer Aufweitung des Spreizelements führt.

Um eine Drehbewegung des Spreizelements relativ zum Untergrund zu verhindern, kann das Spreizelement zusätzlich einen Vorsprung an seiner Umfangsfläche aufweisen, der eine Drehbewegung des Spreizelements bei ausgehärtetem Mörtel blockiert.

Das Spreizelement weist gemäß einer Ausführungsform seitlich angeordnete Schlitze auf, insbesondere wobei sich die Schlitze in einer Längsrichtung des Ankerbolzens erstrecken und/oder wobei die Schlitze in Umfangsrichtung zumindest teilweise überlappend angeordnet sind. Die Schlitze erleichtern ein Aufweiten des Spreizelements, da eine Flexibilität des Spreizelements durch die Schlitze erhöht ist. Insbesondere können sich die Schlitze, beispielsweise in axialer Richtung und/oder in Umfangsrichtung, aufweiten und dadurch ein Aufweiten des Spreizelements weiter unterstützen.

An einer Stirnseite des Ankerabschnitts, der einem Einsteckende des Ankerbolzens zugeordnet ist, kann ein Auflagebolzen angeordnet sein, insbesondere wobei zwischen dem Auflagebolzen und der Stirnseite des Ankerabschnitts eine Pufferscheibe angeordnet ist. Der Auflagebolzen dient unter anderem dazu, die Spreizhülse bzw. das Spreizelement an dem Ankerabschnitt zu befestigen. Dies ist insbesondere dann notwendig, wenn der Ankerabschnitt eine Schräge aufweist, die beispielsweise als Installationshilfe oder zum Zerkleinern von Patronen oder als Verdrängungshilfe zum Verdrängen des Mörtels dient.

Die Pufferscheibe ist vorzugsweise kompressibel und dient somit einerseits zum Toleranzausgleich und erlaubt andererseits eine axiale Verschiebung der Spreizhülse relativ zum Ankerabschnitt des Ankerbolzens. Hierdurch kann sich das Spreizelement zumindest in axiale Richtung verschieben, um sich aufzuweiten.

Der Ankerabschnitt weitet sich beispielsweise unter einem Ankerwinkel ausgehend vom Schaftabschnitt in Richtung eines Einsteckendes des Ankerbolzens auf. Insbesondere weitet sich der Ankerabschnitt in Bezug auf eine Mittelachse beziehungsweise Rotationsachse des Ankerbolzens auf. Dadurch wird erreicht, dass die Spreizhülse durch eine auf einen in einem Untergrund verankerten Ankerbolzen wirkende Zugkraft und/ oder Querkraft aufgeweitet wird.

In einer alternativen Ausführungsform kann sich der Ankerabschnitt ausgehend vom Schaftabschnitt in Richtung eines Einsteckendes des Ankerbolzens verjüngen. Die Verjüngung kann eine Montage das Spreizelement vereinfachen, insbesondere dann, wenn das Spreizelement als Spritzgussteil vorgefertigt ist und auf den Ankerabschnitt aufgesteckt wird.

Das Spreizelement kann mehrere Konen umfassen, die jeweils einen Aufweitwinkel aufweisen. Somit sind in einer Draufsicht auf den Ankerbolzen mehrere Anlagebereiche gebildet, die mit Befestigungsmörtel interagieren können, beispielsweise wenn der Ankerbolzen in einem Loch im Untergrund eingebracht ist. Der Ankerbolzen kann dadurch zuverlässig im Untergrund verankert werden. Die Radien der Konen können gleich sein oder voneinander unterschiedlich sein. Insbesondere können die Radien der Konen ausgehend vom Schaftabschnitt in Richtung zum Einsteckende hin zunehmen. Die Winkel der Konen können ebenfalls ausgehend vom Schaftabschnitt in Richtung zum Einsteckende hin zunehmen oder gleich bleiben.

Die Anlagebereiche können als Hinterschnitte ausgebildet sein.

Gemäß einer Ausführungsform nimmt die Summe des Ankerwinkels und des jeweiligen Aufweitwinkels ausgehend vom Schaftabschnitt in Richtung des Einsteckendes des Ankerbolzens zu und/oder liegt jeweils zwischen 3° und 60°, insbesondere zwischen 22° und 28°. Auf diese Weise kann eine zuverlässige Verankerung des Ankerbolzens und vorteilhafte Spannungsverteilung im Untergrund erreicht werden.

Die Radien der Konen, insbesondere die Anfangs- und/oder Endradien der Konen, können ausgehend vom Schaftabschnitt in Richtung des Einsteckendes gleich bleiben oder zunehmen.

Das Spreizelement ist vorzugsweise durch Umspritzen oder Umgießen zumindest des Ankerabschnitts gebildet, wodurch das Spreizelement umfangsseitig direkt dem Ankerabschnitt zugeordnet ist bzw. diesen umgibt, insbesondere am Ankerabschnitt direkt anliegt. Auf diese Weise kann vermieden werden, dass durch Toleranzabweichungen ein ungewollter Spalt zwischen dem Ankerabschnitt und dem Spreizelement gebildet ist. Ein solcher Spalt würde sich nachteilig auf das Aufspreizverhalten des Spreizelements auswirken, da zuerst der Spalt überbrückt werden müsste, bevor das Spreizelement beginnen kann sich aufzuweiten. Beispielsweise ist das Spreizelement eine aufgespritzte Kunststofffolie, die eine Stärke bis zu 1 mm haben kann.

Das Spreizelement kann aus einem duroplastischen oder thermoplastischen Material bestehen.

Der Schaftabschnitt und der Ankerabschnitt können als separate Bauteile ausgebildet sein, die miteinander gekoppelt sind, um den Ankerbolzen auszubilden, insbesondere sind der Schaftabschnitt und der Ankerabschnitt miteinander verschraubt. Alternativ können der Schaftabschnitt und der Ankerabschnitt einteilig ausgebildet sein. Eine mehrteilige Ausführung ermöglicht jedoch die Umsetzung von komplexeren Geometrien in Vergleich zu einem einteiligen Ankerbolzen. Zudem kann durch eine separate Ausbildung von Ankerabschnitt und Schaftabschnitt ein modulares Baukastensystem umgesetzt werden, bei dem mehrere Schaftabschnitte und/oder Ankerabschnitte je nach Bedarf miteinander kombiniert werden können.

Die Aufgabe wird des Weiteren erfindungsgemäß gelöst durch ein Befestigungssystem, aufweisend einen wie vorhergehend beschrieben ausgeführten Ankerbolzen und Befestigungsmörtel.

Der Befestigungsmörtel ist beispielsweise in einem Loch eingebracht, in das der Ankerbolzen eingesteckt ist, wobei das Spreizelement relativ zum Befestigungsmörtel bewegbar ist, insbesondere wobei das Spreizelement axial und/oder radial gegenüber dem Befestigungsmörtel verschiebbar ist. Der Ankerbolzen ist dabei beispielsweise axial gegenüber dem Befestigungsmörtel beweglich. Dies ermöglicht ein Aufbrechen des Befestigungsmörtels, sodass sich der Ankerabschnitt über die aufgeweiteten Teilen des Spreizelements mit der daran anhaftenden Mörtelhülse verankern kann, insbesondere den Segmenten der Mörtelhülse nach dem Aufbrechen der Mörtelhülse.

Gemäß einer bevorzugten Ausführungsform ist der Lösewiderstand zwischen dem Spreizelement und dem Ankerabschnitt kleiner gleich dem Lösewiderstand zwischen dem Spreizelement und dem Befestigungsmörtel. Das Spreizelement kann folglich aufgeweitet werden, bevor es sich vom Befestigungsmörtel löst. Dadurch wird ein Aufbrechen des Befestigungsmörtels erleichtert.

Die Aufgabe wird des Weiteren erfindungsgemäß gelöst durch ein Verfahren zur Herstellung eines Ankerbolzens, mit den folgenden Schritten:
- Bereitstellen eines Ankerabschnitts, und
- Umspritzen oder Umgießen des Ankerabschnitts, sodass ein hülsenförmiges Spreizelement den Ankerabschnitt zumindest bereichsweise umfangsmäßig derart umgibt, dass es relativ zum Ankerabschnitt bewegbar ist.

Das hülsenförmige Spreizelement wird vorzugsweise beabstandet zu einem Anschlag des Ankerbolzens aufgespritzt. Somit können Spannungen beim Abkühlen des aufgespritzten Spreizelements vermieden werden.

Weitere Vorteile und Merkmale der Erfindung ergeben sich aus der nachfolgenden Beschreibung und aus den Zeichnungen, auf die Bezug genommen wird. In den Zeichnungen zeigen:
- Figuren 1a und 1b eine erste Ausführungsform eines erfindungsgemäßen Ankerbolzens in einer Seitenansicht und einer Schnittdarstellung,
- Figuren 2 bis 9 jeweils eine alternative Ausführungsform eines erfindungsgemäßen Ankerbolzens, und
- Figur 10 ein erfindungsgemäßes Befestigungssystem.

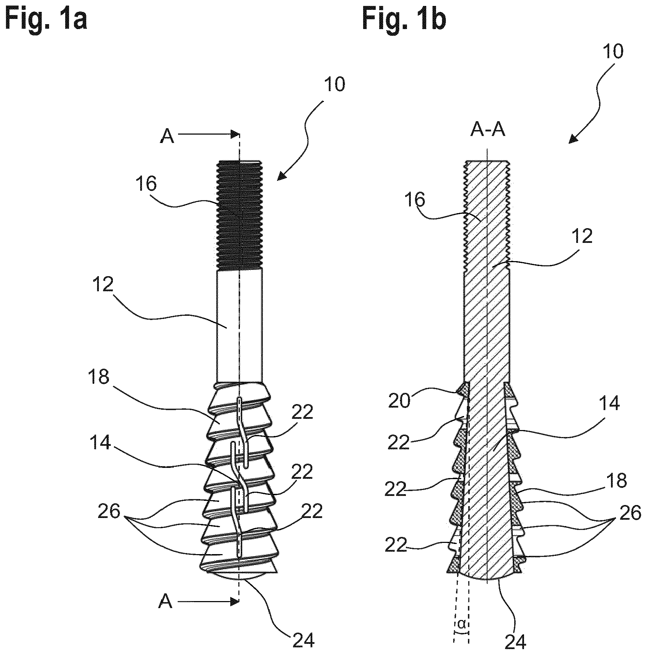

Die Figuren 1a und 1b zeigen eine erste Ausführungsform eines erfindungsgemäßen Ankerbolzens 10 mit einem Schaftabschnitt 12 und einem Ankerabschnitt 14, wobei Figur 1a eine Seitenansicht und Figur 1b eine Schnittdarstellung entlang der in Figur 1a gezeigten Linie A-A zeigt. Der Schaftabschnitt 12 weist einen Befestigungsbereich 16 auf, der ein Gewinde umfasst, über das eine Last am Ankerbolzen 10 befestigt werden kann.

Der Befestigungsbereich 16 kann sich vollständig oder nur bereichsweise über den Schaftabschnitt 12 erstrecken.

Der Ankerbolzen 10 umfasst des Weiteren ein Spreizelement 18, das hülsenförmig ausgebildet ist und den Ankerabschnitt 14 zumindest bereichsweise umfangsmäßig umgibt.

Das Spreizelement 18 ist derart an dem Ankerabschnitt 14 angeordnet, dass eine Relativbewegung zwischen dem Spreizelement 18 und dem Ankerabschnitt 14 möglich ist. Insbesondere ist das Spreizelement 18 relativ zum Ankerabschnitt 14 axial und/oder radial verschiebbar. Das Spreizelement 18 stellt dabei eine aufweitbare Mantelfläche bereit.

Beispielsweise ist das Spreizelement 18 in Form einer Hülse durch Umspritzen des Ankerabschnitts 14 gebildet. Um das Spreizelement 18 in einer definierten Position anzuordnen, ist am Ankerbolzen 10 ein Anschlag 20 vorgesehen, insbesondere in Form einer Stufe. Der Anschlag 20 ist vorzugsweise im Bereich des Übergangs vom Ankerabschnitt 14 zum Schaftabschnitt 12 angeordnet. Insbesondere ist der Anschlag 20 auf einer Höhe zwischen 0 und 80% der im Befestigungsmörtel eingebundenen Länge angebracht.

Insbesondere wird bei der Herstellung des Ankerbolzens 10 das hülsenförmige Spreizelement 18 beabstandet zu dem Anschlag 20 des Ankerbolzens 10 aufgespritzt.

Um die Steifigkeit des Spreizelements 18 zu reduzieren, insbesondere um eine ausreichende Flexibilität des Spreizelements 18 zu gewährleisten, weist das Spreizelement 18 (seitlich angeordnete) Schlitze 22 auf, die sich in einer Längsrichtung des Ankerbolzens 10 erstrecken. Durch die Schlitze 22 ist das Aufweiten des Spreizelements 18 vereinfacht, da die Schlitze 22 unter Krafteinwirkung quasi auseinandergezogen beziehungsweise aufgedrückt werden können.

Die Schlitze 22 sind dabei in Umfangsrichtung teilweise überlappend angeordnet.

In einem Bereich, in dem mehrere Schlitze 22 überlappend angeordnet sind, kann sich das Spreizelement 18 stärker aufweiten als in einem Bereich, in dem in Umfangsrichtung nur ein Schlitz 22 oder gar kein Schlitz 22 angeordnet ist.

In den dargestellten Ausführungsformen sind insgesamt jeweils sechs Schlitze 22 in einem Spreizelement 18 vorgesehen, wobei jeweils zwei Schlitze 22 zueinander rotationssymmetrisch angeordnet sein können, sodass an zwei Seiten des Spreizelements 18 jeweils drei Schlitze angeordnet sind.

Die Schlitze 22 sind leicht S-Förmig ausgebildet und teilweise überlappend angeordnet. In Längsrichtung gesehen entspricht der Bereich, in dem sich zwei in Längsrichtung aufeinanderfolgende Schlitze 22 überlappen einem Drittel der Längsausdehnung eines Schlitzes 22.

In der in Figur 1b dargestellten Schnittdarstellung ist zu sehen, dass sich der Ankerabschnitt 14 ausgehend vom Schaftabschnitt 12 in Richtung eines Einsteckendes 24 des Ankerbolzens 10 in Bezug auf eine Mittelachse unter einem Ankerwinkel α aufweitet. Der Ankerwinkel α bewirkt, dass das Spreizelement 18 aufgeweitet wird, wenn sich das Spreizelement 18 relativ zum Ankerabschnitt 14 in axiale Richtung bewegt.

Das Spreizelement 18 umfasst mehrere Konen 26, die jeweils einen Aufweitwinkel β aufweisen. Durch diese Geometrie lässt sich der Ankerbolzen 10 zuverlässig in einem Untergrund verankern.

Die Summe des Ankerwinkels α und des jeweiligen Aufweitwinkels β nimmt ausgehend vom Schaftabschnitt 12 in Richtung zum Einsteckende 24 des Ankerbolzens 10 zu. Insbesondere beträgt die Summe des Ankerwinkels α und des jeweiligen Aufweitwinkels β jeweils zwischen 3° und 60°, vorzugsweise zwischen 22° und 28°.

Für gleiche Strukturen mit gleichen Funktionen, die von der obigen Ausführungsform bekannt sind, werden im Folgenden dieselben Bezugszeichen verwendet und es wird insoweit auf die vorangegangenen Erläuterungen verwiesen, wobei nachfolgend auf die Unterschiede der jeweiligen Ausführungsformen eingegangen wird, um Wiederholungen zu vermeiden.

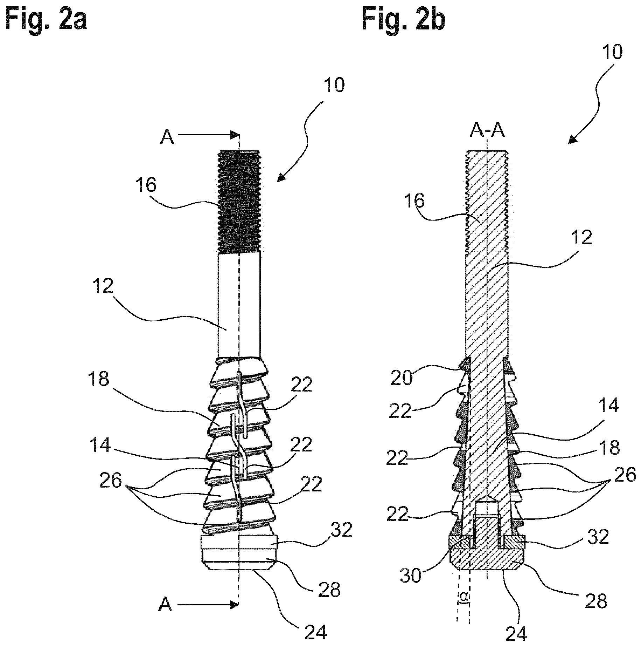

Die Figuren 2a und 2b zeigen eine weitere Ausführungsform eines erfindungsgemäßen Ankerbolzens 10, wobei Figur2a eine Seitenansicht und Figur 2b eine Schnittdarstellung entlang einer Linie A-A zeigt.

Bei dieser Ausführungsform ist an einer Stirnseite des Ankerabschnitts 14, der das Einsteckende 24 des Ankerbolzens 10 zugeordnet ist, ein Auflagebolzen 28 angeordnet. Der Auflagebolzen 28 ist mit dem Ankerbolzen 10, insbesondere mit dem Ankerabschnitt 14 verbunden, und zwar mittels einem Gewinde 30. Das heißt, der Auflagebolzen 28 ist mit dem Ankerbolzen 10 verschraubt. Durch den Auflagebolzen 28 wird das Spreizelement 18 am Ankerabschnitt 14 des Ankerbolzens 10 gehalten, sodass verhindert wird, dassdas Spreizelement 18 von dem Ankerbolzen 10 herunterrutscht.

Konkret weist der Ankerabschnitt 14 eine Aufnahme mit Innengewinde auf, in die ein Stift des Auflagebolzen 28 über ein entsprechendes Außengewinde eingeschraubt ist.

Um jedoch eine gewisse Relativbewegung zwischen dem Ankerabschnitt 14 und dem Spreizelement 18 zu ermöglichen, ist eine Pufferscheibe 32 vorgesehen, die zwischen dem Auflagebolzen 28 und der Stirnseite des Ankerabschnitts 14 angeordnet ist. Die Pufferscheibe 32 ist kompressibel und erlaubt folglich unter Krafteinwirkung eine Verschiebung des Spreizelements 18 in axiale Richtung.

Zudem liegt die Pufferscheibe 32 an einem durch den Ankerabschnitt 14 gebildeten Anschlag teilweise an, sodass die Pufferscheibe 32 zwischen dem Auflagebolzen 28 und dem Ankerabschnitt 14 geklemmt ist.

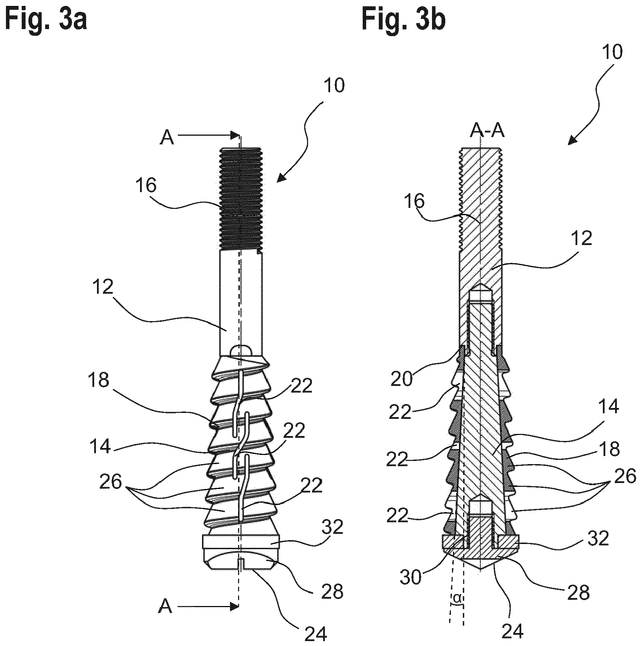

Die Figuren 3a und 3b zeigen eine weitere Ausführungsform eines erfindungsgemäßen Ankerbolzens 10, wobei Figur 3a eine Seitenansicht und Figur 3b eine Schnittdarstellung entlang einer Linie A-A zeigt.

Die in den Figuren 3a und 3b gezeigte Ausführungsform unterscheidet sich von den vorhergehend beschriebenen Ausführungsformen dadurch, dass der Ankerabschnitt 14 und der Schaftabschnitt 12 des Ankerbolzens 10 als separate Bauteile ausgebildet sind, die miteinander gekoppelt sind, um den Ankerbolzen 10 auszubilden.

Insbesondere sind der Ankerabschnitt 14 und der Schaftabschnitt 12 miteinander verschraubt, wobei sie entsprechende Gewinde aufweisen.

Konkret weist der Ankerabschnitt 14 einen Einsteckbereich samt Außengewinde auf, das mit einem Innengewinde zusammenwirkt, welches in einem Aufnahmebereich des Schaftabschnitts 12 vorgesehen ist.

Des Weiteren weist der Auflagebolzen 28 schräge Seitenflächen auf, sodass ein dachförmiges Einsteckende 24 des Ankerbolzens 10 gebildet ist. Dadurch ist ein Einführen des Ankerbolzens 10 in eine Öffnung, insbesondere ein Bohrloch, vereinfacht.

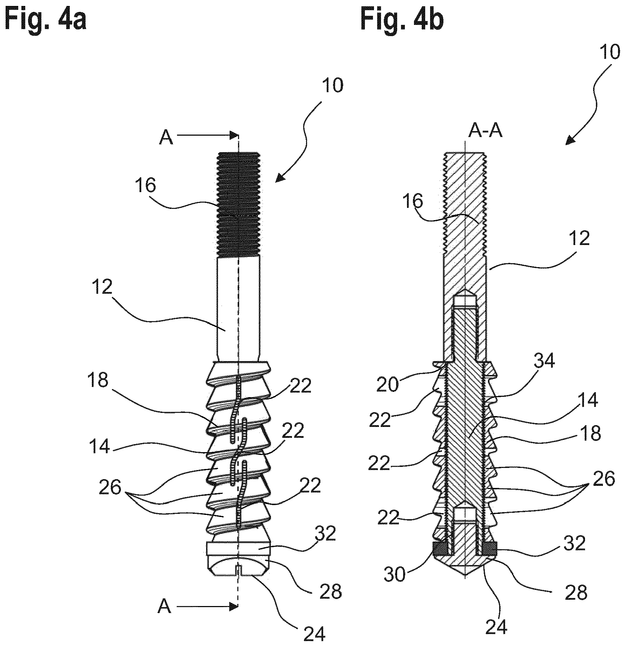

Die Figuren 4a und 4b zeigen eine weitere Ausführungsform eines erfindungsgemäßen Ankerbolzens 10, wobei Figur4a eine Seitenansicht und Figur 4b eine Schnittdarstellung entlang einer Linie A-A zeigt.

Im Unterschied zu der in den Figuren 3a und 3b gezeigten Ausführungsform weitet sich der Ankerabschnitt 14 nicht auf, sondern umfasst stattdessen ein Gewinde 34 in dem Bereich, in dem das Spreizelement 18 angeordnet ist. Insbesondere erstreckt sich das Gewinde 34 in Längsrichtung des Ankerbolzens 10 vollständig entlang dem Spreizelement 18, wenn dieses am Anschlag 20 anliegt.

Wird das Spreizelement 18 radial gegenüber dem Ankerabschnitt 14 verschoben, dreht sich das Spreizelement 18 am Gewinde 34 entlang und wird zwischen dem Anschlag 20 und dem Auflagebolzen 28 gestaucht und dadurch aufgeweitet. Die Pufferschiebe 32 kann in dieser Ausführungsform inkompressibel oder nur sehr geringem Maß kompressibel sein, sodass das Spreizelement 18 bereits bei einer geringen Verdrehung gestaucht und aufgeweitet wird.

Zudem umfasst das Spreizelement 18 im Wesentlichen gleichförmige Konen 26. Hierdurch ist der am Übergang zwischen dem Schaftabschnitt 12 und dem Ankerabschnitt 14 vorgesehene Konus 26 im Wesentlichen gleichartig ausgebildet wie der Konus 26, der dem Einsteckende 24 zugeordnet ist.

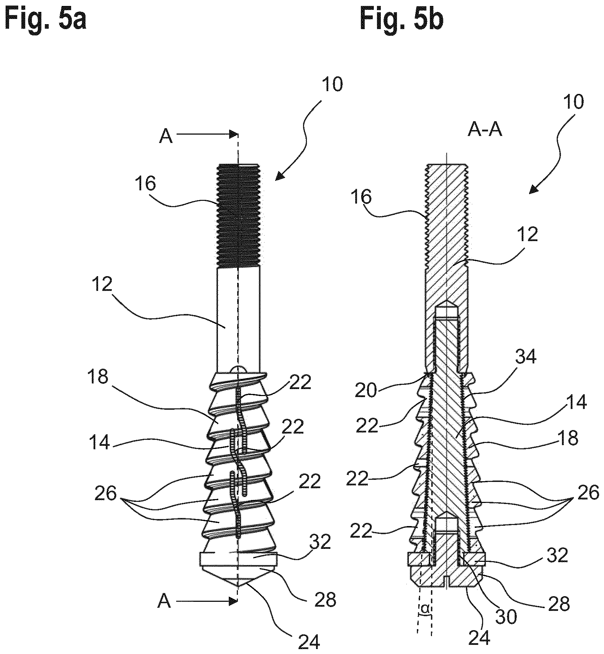

Die Figuren 5a und 5b zeigen eine weitere Ausführungsform eines erfindungsgemäßen Ankerbolzens 10, wobei Figur 5a eine Seitenansicht und Figur 5b eine Schnittdarstellung entlang einer Linie A-A zeigt.

Bei dieser Ausführungsform weitet sich der Ankerabschnitt 14 ausgehend vom Schaftabschnitt 12 in Richtung des Einsteckendes 24 und einem Ankerwinkel α auf. Gleichzeitig umfasst der Ankerabschnitt 14 ein Gewinde 34 in dem Bereich, in dem das Spreizelement 18 angeordnet ist.

Insofern entspricht die in den Figuren 5a und 5b gezeigten Ausführungsformen im Wesentlichen einer Kombination der Ausführungsformen gemäß der Figuren 3 und 4.

Wird das Spreizelement 18 radial gegenüber dem Ankerabschnitt 14 verschoben, dreht sich das Spreizelement 18 am Gewinde 34 entlang. Aufgrund der Aufweitung des Ankerabschnitts 14 wird das Spreizelement 18 dabei aufgeweitet.

Durch eine separate Ausbildung von Schaftabschnitt 12 und Ankerabschnitt 14 kann ein modulares Baukastensystem umgesetzt werden. Dabei können zum Beispiel unterschiedliche Schaftabschnitte 12 mit einem Ankerabschnitt 14 kombiniert werden.

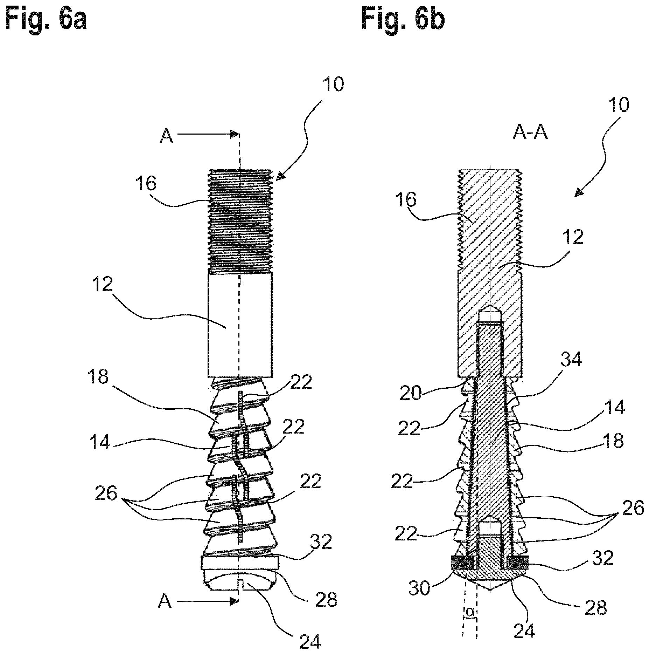

Dies wird anhand der Figuren 6a und 6b veranschaulicht. Diese zeigen eine weitere Ausführungsform eines erfindungsgemäßen Ankerbolzens 10, wobei Figur 6a eine Seitenansicht und Figur 6b eine Schnittdarstellung entlang einer Linie A-A zeigt.

Bei dieser Ausführungsform ist der Ankerabschnitt 14 mit einem Schaftabschnitt 12 kombiniert, der einen unterschiedlichen Durchmesser im Vergleich zu den vorherigen Ausführungsformen hat. Insbesondere hat der Schaftabschnitt 12 einen größeren Außendurchmesser als der Ankerabschnitt 14.

Der Ankerabschnitt 14 der in Figur 6 gezeigten Ausführungsform entspricht jedoch im Wesentlichen dem Ankerabschnitt 14 der in Figur 5 gezeigten Ausführungsform, insbesondere sind beide gleich.

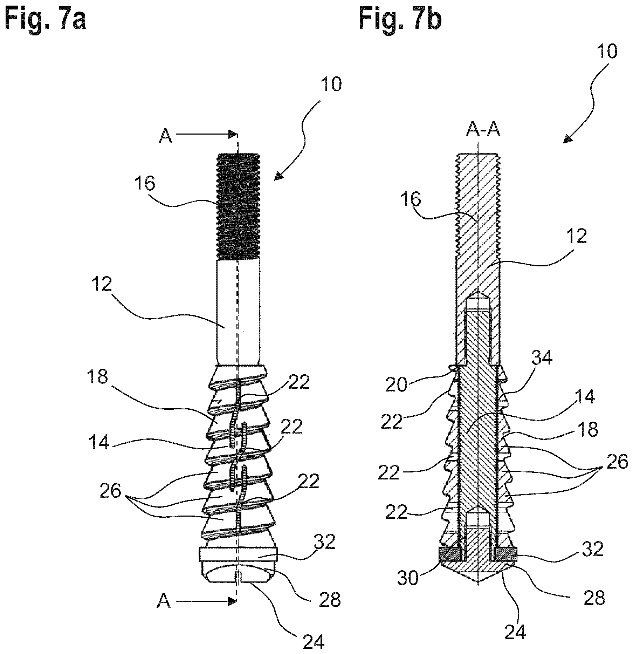

Die Figuren 7a und 7b zeigen eine weitere Ausführungsform eines erfindungsgemäßen Ankerbolzens 10, wobei Figur 7a eine Seitenansicht und Figur 7b eine Schnittdarstellung entlang einer Linie A-A zeigt.

Bei dieser Ausführungsform ist der Ankerabschnitt 14 wie bei der Ausführungsform gemäß Figur 4 mit einem Gewinde 34 versehen und verläuft gerade, das heißt er weitet sich nicht auf.

Allerdings nimmt die Größe der Konen 26 ausgehend vom Schaftabschnitt 12 hin zum Einsteckende 24 zu. Insbesondere nimmt sowohl der Anfangsdurchmesser der Konen 26 als auch der Außendurchmesser der Konen 26 vom Schaftabschnitt 12 hin zum Einsteckende 24 zu. Dadurch wird eine zwischen dem Spreizelement 18 und einem Untergrund angeordnete Mörtelhülse bei einer Relativbewegung zwischen dem Ankerabschnitt 14 und dem Spreizelement 18 noch stärker gegen den Untergrund gedrückt.

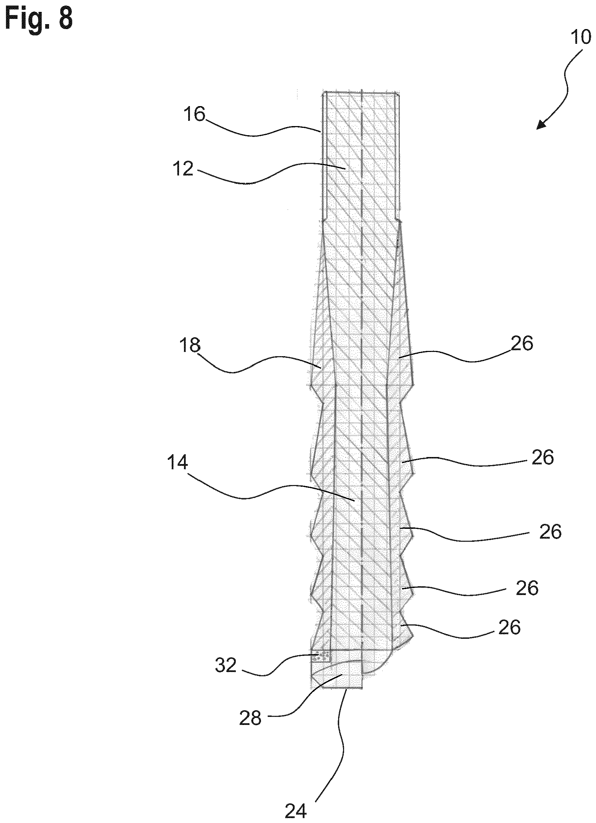

Figuren 8 zeigt eine weitere Ausführungsform eines erfindungsgemäßen Ankerbolzens 10 in einer Schnittdarstellung. Bei dieser Ausführungsform verjüngt sich der Ankerabschnitt 14 ausgehend vom Schaftabschnitt 12 in Richtung zum Einsteckende 24 hin, wobei an den sich verjüngenden Abschnitt 48 ein Bereich 50 mit konstantem Durchmesser anschließt. Der sich verjüngende Abschnitt 48 dient als Montagehilfe beim Aufstecken des Spreizelements 18. Der Betrag der Verjüngung entspricht dabei ungefähr 1/3 des Ausgangsdurchmessers.

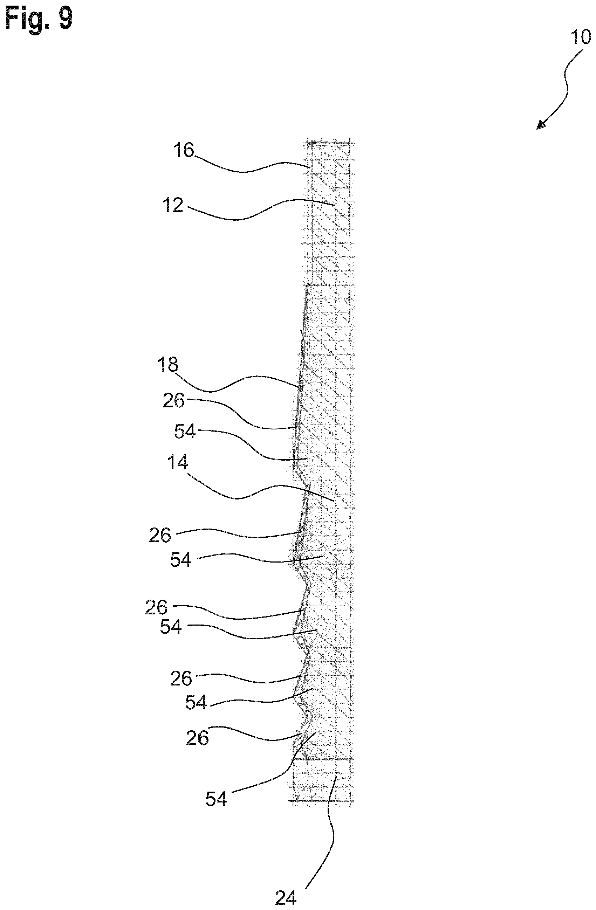

Figur 9 zeigt eine weitere Ausführungsform eines erfindungsgemäßen Ankerbolzens 10 in einer Teilschnittdarstellung.

In dieser Ausführungsform ist die Spreizhülse 18 durch eine Folie 52, insbesondere eine Schrumpffolie gebildet. Die Konen 26 des Spreizelements 18 sind dabei durch korrespondierende Konen 54 im Ankerabschnitt 14 gebildet.

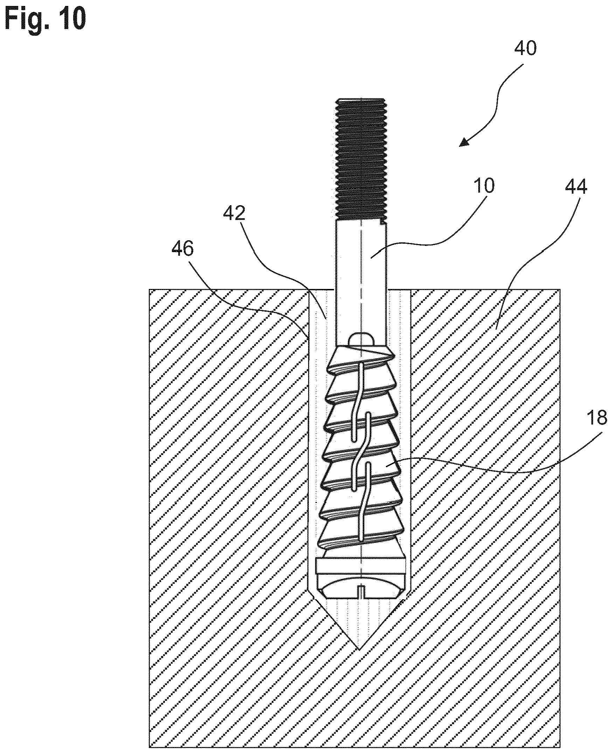

Figur 10 zeigt ein erfindungsgemäßes Befestigungssystem 40 mit einem Ankerbolzen 10 und einem Befestigungsmörtel 42, wobei der Ankerbolzen 10 mittels des Befestigungsmörtels 42 in einem Untergrund 44 verankert ist. Zu diesem Zweck ist der Befestigungsmörtel 42 in einem Loch 46 eingebracht, in das der Ankerbolzen 10 eingesteckt ist, wobei das Spreizelement 18 relativ zum Befestigungsmörtel 42 bewegbar ist, insbesondere axial und/oder radial gegenüber dem Befestigungsmörtel 42 verschiebbar ist.

Dabei ist ein Lösewiderstand zwischen dem Spreizelement 18 und dem Ankerabschnitt 14 kleiner gleich dem Lösewiderstand zwischen dem Spreizelement 18 und dem Befestigungsmörtel 42.

Hierdurch ist sichergestellt, dass sich zunächst das Spreizelement 18 aufweitet, bevor sich der Befestigungsmörtel 42 vom Spreizelement 18 löst.

Generell kann beim Befestigungssystem 40 jeder der zuvor gezeigten Ankerbolzen 10 verwendet werden.

## Patentansprüche

1. Ankerbolzen (10) zur Verwendung in Befestigungsmörtel (42), aufweisend einen Schaftabschnitt (12), einen Ankerabschnitt (14) und ein Spreizelement (18), wobei das Spreizelement (18) hülsenförmig ausgebildet ist und den Ankerabschnitt (14) zumindest bereichsweise umfangsmäßig derart umgibt, dass das Spreizelement (18) zumindest relativ zum Ankerabschnitt (14) bewegbar ist, und wobei das Spreizelement (18) eine aufweitbare Mantelfläche bereitstellt.

2. Ankerbolzen (10) nach Anspruch 1, **dadurch gekennzeichnet, dass** das Spreizelement (18) axial und/oder radial gegenüber dem Ankerabschnitt (14) verschiebbar ist.

3. Ankerbolzen (10) nach einem der vorhergehenden Ansprüche, **dadurch gekennzeichnet, dass** der Ankerbolzen (10) einen Anschlag (20) aufweist, an dem das Spreizelement (18) anliegt.

4. Ankerbolzen (10) nach einem der vorhergehenden Ansprüche, **dadurch gekennzeichnet, dass** das Spreizelement (18) seitlich angeordnete Schlitze (22) aufweist, insbesondere wobei sich die Schlitze (22) in einer Längsrichtung des Ankerbolzens (10) erstrecken und/oder wobei die Schlitze (22) in Umfangsrichtung zumindest teilweise überlappend angeordnet sind.

5. Ankerbolzen (10) nach einem der vorhergehenden Ansprüche, **dadurch gekennzeichnet, dass** an einer Stirnseite des Ankerabschnitts (14), der einem Einsteckende (24) des Ankerbolzens (10) zugeordnet ist, ein Auflagebolzen (28) angeordnet ist, insbesondere wobei zwischen dem Auflagebolzen (28) und der Stirnseite des Ankerabschnitts (14) eine Pufferscheibe (32) angeordnet ist.

6. Ankerbolzen (10) nach einem der vorhergehenden Ansprüche, **dadurch gekennzeichnet, dass** sich der Ankerabschnitt (14) unter einem Ankerwinkel (α) ausgehend vom Schaftabschnitt (12) in Richtung eines Einsteckendes (24) des Ankerbolzens (10) aufweitet.

7. Ankerbolzen (10) nach einem der vorhergehenden Ansprüche 1 bis 5, **dadurch gekennzeichnet, dass** sich der Ankerabschnitt (14) ausgehend vom Schaftabschnitt (12) in Richtung eines Einsteckendes (24) des Ankerbolzens (10) verjüngt.

8. Ankerbolzen (10) nach einem der vorhergehenden Ansprüche, **dadurch gekennzeichnet, dass** das Spreizelement (18) mehrere Konen (26) umfasst, die jeweils einen Aufweitwinkel (β) aufweisen.

9. Ankerbolzen (10) nach Anspruch 7 und 8, **dadurch gekennzeichnet, dass** die Summe des Ankerwinkel (α) und des jeweiligen Aufweitwinkels (β) ausgehend vom Schaftabschnitt (12) in Richtung des Einsteckendes (24) des Ankerbolzens (10) zunimmt und/oder jeweils zwischen 3° und 60° ist, insbesondere zwischen 22° und 28°.

10. Ankerbolzen (10) nach einem der vorhergehenden Ansprüche, **dadurch gekennzeichnet, dass** das Spreizelement (18) durch Umspritzen oder Umgießen zumindest des Ankerabschnitts (14) gebildet ist.

11. Ankerbolzen (10) nach einem der vorhergehenden Ansprüche, **dadurch gekennzeichnet, dass** der Schaftabschnitt (12) und der Ankerabschnitt (14) als separate Bauteile ausgebildet sind, die miteinander gekoppelt sind, um den Ankerbolzen (10) auszubilden, insbesondere miteinander verschraubt sind.

12. Befestigungssystem (40), aufweisend einen Ankerbolzen (10) nach einem der Ansprüche 1 bis 11 und Befestigungsmörtel (42).

13. Befestigungssystem (40) nach Anspruch 12, **dadurch gekennzeichnet, dass** der Befestigungsmörtel (42) in einem Loch (46) eingebracht ist, in das der Ankerbolzen (10) eingesteckt ist, wobei das Spreizelement (18) relativ zum Befestigungsmörtel (42) bewegbar ist, insbesondere wobei das Spreizelement (18) axial und/oder radial gegenüber dem Befestigungsmörtel (42) verschiebbar ist.

14. Befestigungssystem (40) nach Anspruch 12 oder 13, **dadurch gekennzeichnet, dass** der Lösewiderstand zwischen dem Spreizelement (18) und dem Ankerabschnitt (14) kleiner gleich dem Lösewiderstand zwischen dem Spreizelement (18) und dem Befestigungsmörtel (42) ist.

15. Verfahren zur Herstellung eines Ankerbolzens (10), mit den folgenden Schritten:
- Bereitstellen eines Ankerabschnitts (14), und
- Umspritzen oder Umgießen des Ankerabschnitts (14), sodass ein hülsenförmiges Spreizelement (18) den Ankerabschnitt (14) zumindest bereichsweise umfangsmäßig derart umgibt, dass es relativ zum Ankerabschnitt (14) bewegbar ist.

16. Verfahren nach Anspruch 15, **dadurch gekennzeichnet, dass** das hülsenförmige Spreizelement (14) beabstandet zu einem Anschlag (20) des Ankerbolzens (10) aufgespritzt wird.
